# EUROPEAN PATENT SPECIFICATION

(11) **EP 3 750 782 B1**
(45) Date of publication and mention of the grant of the patent: **06.11.2024**
(21) Application number: 20179355.1
(22) Date of filing: 10.06.2020
(51) Int. Cl.: B62D 7/14

(54) **IMPROVED ROCKER/LEVER ARM ASSEMBLY FOR A STEERING SYSTEM OF A VEHICLE**
VERBESSERTE KIPPHEBEL-/HEBELARMANORDNUNG FÜR EIN LENKSYSTEM EINES FAHRZEUGS
ENSEMBLE BRAS DE LEVIER/CULBUTEUR AMÉLIORÉ POUR UN SYSTÈME DE DIRECTION D'UN VÉHICULE

(30) Priority: 10.06.2019 IT 201900008511
(43) Date of publication of application: 16.12.2020
(73) Proprietor: IVECO MAGIRUS AG, 89079 Ulm (DE)
(72) Inventor: KOEBERLE, Florian, 89075 ULM (DE); SCHNEIDER, Elias, 89250 SENDEN (DE); DIRR, Philipp, 89284 PFAFFENHOFEN A. D. ROTH (DE)
(74) Representative: Studio Torta S.p.A.

(56) References cited:
- EP-A1- 2 261 101
- EP-A1- 2 851 269

## Description

### CROSS-REFERENCE TO RELATED APPLICATIONS

This patent application claims priority from Italian patent application no. 102019000008511 filed on 10/06/2019.

### TECHNICAL FIELD

The present invention concerns a rocker/lever arm, in particular to a rocker/lever arm assembly for a steering system of a vehicle.

### BACKGROUND OF THE INVENTION

All vehicles are provided with steering system systems configured to allow steering of vehicle wheels.

Such steering system systems are realized in many different ways and may comprise rocker/lever arms configured to torsionally connect together two elements of a steering system. In particular, such a rocker/lever arm comprises a first and a second arms connected to an hub which is carried by vehicle's chassis. Such hub is carried by the chassis in a rotatably free manner around an axis defined by such rotatable connection.

Both arms of the rocker/lever arm comprises a connecting portion for connecting steering system's elements and they are placed on opposite sides with respect to a plane passing from the center of the carrying hub and parallel to ground. Accordingly, steering system's elements are linked in a torsionally way around the axis of the hub, as requested.

An example of such a steering system is described in EP2261101 A1 and it is clear that the rotatable free connection of the hub to the chassis is crucial due to the loads which are imparted from this latter to chassis.

Another example of a steering system is described in EP2851269 A1.

Usually, even if not described in EP2261101 A1, hub of rocker/lever arm is carried on a supporting kingpin, realized integral to the chassis, thanks to a pair of rolling bearing mounted in known way thanks between kingpin and rocker/lever arm.

However, such construction is complex and expensive. Indeed, it is necessary to perfectly mount coaxially the two bearings on the kingpin so that loads are symmetrically imparted on support arm. If this condition is not correctly achieved, fatigue life of roller bearings is drastically reduced because of the higher loads acting on one of the bearings.

Furthermore, the necessity of providing axial support to bearings needs to provide shoulders and axial thrusts system, thereby making the mounting of the rocker/lever arm on the kingpin realized on the chassis long and complex.

According to the above, the need is felt to provide simplified and economic rocker/lever arm assembly while maintain at the same time their operational performances.

An aim of the present invention is to satisfy the above mentioned needs.

### SUMMARY OF THE INVENTION

The aforementioned aim is reached by a rocker arm assembly as claimed in the appended set of claims.

### BRIEF DESCRIPTION OF DRAWINGS

For a better understanding of the present invention, a preferred embodiment is described in the following, by way of a non-limiting example, with reference to the attached drawings wherein:
- Figure 1 is a schematic lateral view of a steering system of a vehicle comprising a rocker/lever arm;
- Figure 2 is a schematic lateral view of a rocker/lever arm assembly according to the invention;
- Figure 3 is a schematic transversal section view of a first embodiment of the rocker/lever arm of figure 2;
- Figure 4 is a schematic transversal section view of a alternative embodiment of the rocker/lever arm of figure 3; and
- Figure 5 is a schematic transversal section view of a second embodiment of the rocker/lever arm of figure 2.

### DETAILED DESCRIPTION OF THE INVENTION

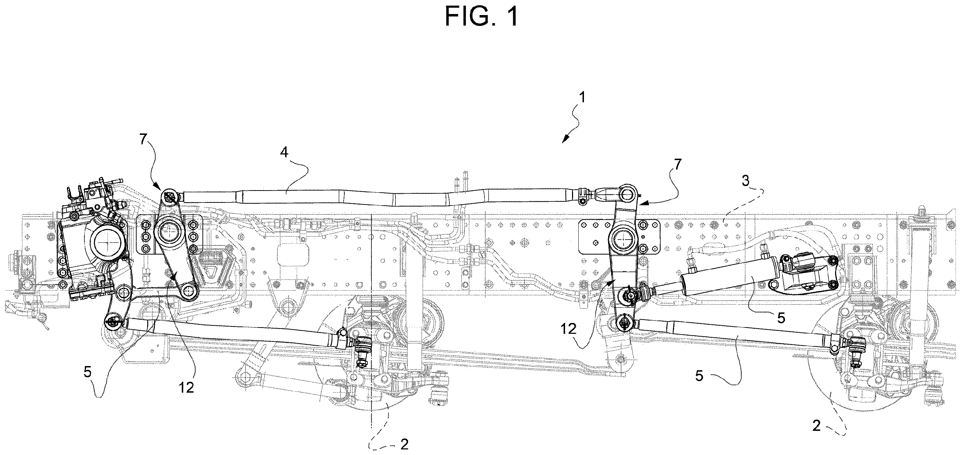

Figure 1 discloses an exemplarily steering system 1 for a vehicle, (not shown in its entirety) e.g. a light commercial vehicle or a heavy vehicle such as a truck, carried by a chassis 3 of the vehicle and configured to control the steering of at least a wheel assembly 2 of this latter.

In particular, steering system 1 comprises a plurality of known elements, not here described in full for sake of brevity, among which at least an upper element 4 and at least a lower element 5 connected in a torsional way to a rocker/lever arm assembly 7 according to the invention.

According to the described configuration, steering system comprises a pair of rocker/lever arms assembly 7, in particular a first, front, rocker/lever arm assembly 7 connecting an upper element 4 and a front lower element 5 and a second, rear, rocker/lever arm assembly 7 connecting such upper element 4 together with two rear lower elements 5.

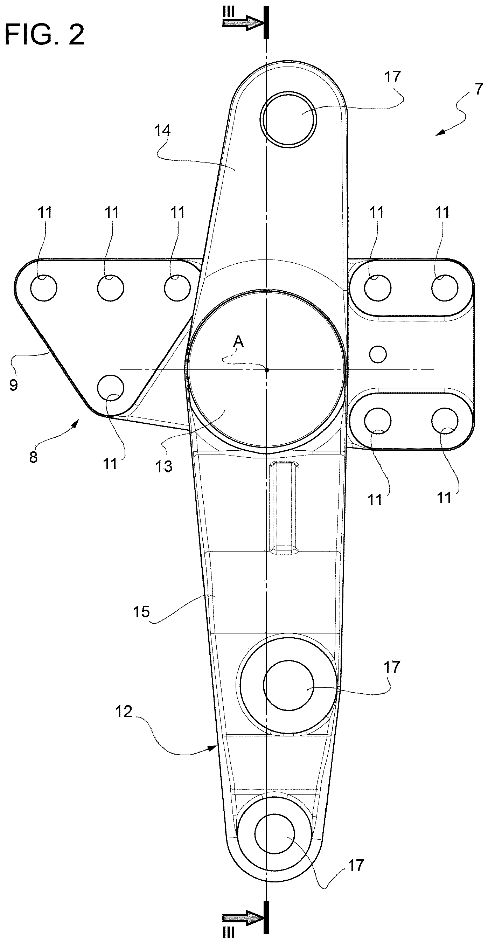

Rocker/lever arm assembly 7 is carried by chassis 3 and comprises, as better shown in figure 2, a fixing element 8 configured to be fixedly mounted of rocker/lever arm assembly 7 on chassis 3. Preferably fixing element 8 comprises a plate 9 provided with a plurality of holes 11 configured to allow the insertion of threaded elements (not shown) to selectively fix plate 9 on chassis 3.

Rocker/lever arm assembly 7 comprises a rocker/lever arm 12 configured to torsionally connect the above mentioned upper and lower elements 4,5 and comprising and hub 13 carried in a rotatable free manner by fixing element 8 around an axis A of rotation and a pair of arms 14, 15 fixedly carried by hub 13.

In particular, axis A is an axis perpendicular to a vertical axis and to longitudinal axis of the vehicle and arms 14, 15 are an upper arm 14 extending from hub 13 getting far from ground above a transversal plane passing from axis A and parallel to ground and a lower arm 15 extending from hub 13 getting closer to ground. Preferably, hub 13 and arms 14, 15 are realized in metal and made as one piece.

More in detail, arms 14, 15 can be substantially parallel one with respect to the other, e.g. see front rocker/lever arm 12 of Figure 1, or inclined one with the other, e.g. see rear rocker/lever arm 12 of Figure 1. Both arms 14 extends radially from hub 13 and comprises, at respective terminal portions, at least one hole 17 configured to allow the connection, e.t. via bolts or by fitting, of the upper and lower steering system elements 4, 5. In the described example of Figure 2, upper arm 14 comprises a single hole 17, while the lower arm 15 comprises two holes 17.

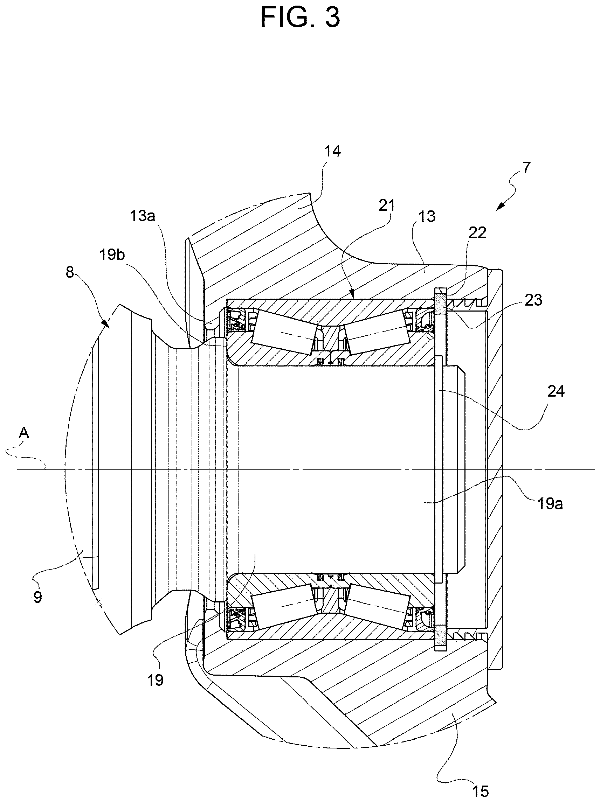

Making reference to figures 3,4 and 5, is easily seen that hub 13 is carried rotatably around axis A on a kingpin 19 extending from fixing element 8 parallel to axis A getting away from chassis of the vehicle.

According to a first embodiment of the invention, rotatably free coupling between hub 13 and kingpin 19 comprises a single bearing 21.

In particular, according to the embodiment of figure 3, kingpin 19 comprises a main cylindrical portion 19a and a shoulder 19b, placed in proximity of plate 9 of fixing element 8 , the single bearing 21 is fitted on cylindrical portion 19a and finds in shoulder 19b a first lower axial endstop.

Hub 13 is configured to define, on the same plane of shoulder 19b, a shoulder 13a configured to define a first upper axial endstop for single bearing 21. On the opposite axial side hub 13 comprises an annular seat 22 configured to house a retaining ring 23, e.g. a Seeger ring, configured to define a second upper axial endstop for single bearing 21.

Preferably, single bearing 21 is a single roller bearing, more preferably a double row tapered roller bearing.

In the embodiment of figure 3, second lower axial endstop is defined by a retaining ring 24, e.g. a snap ring, housed in a relative annular seat realized on cylindrical portion 19a of kingpin 19.

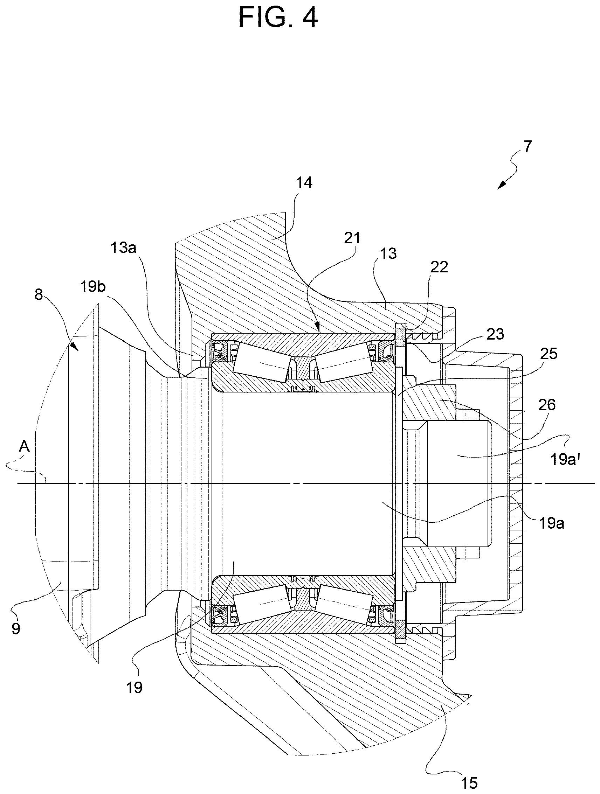

In the alternative embodiment of figure 4, second lower axial endstop is defined by a washer 25 pressed by a self-locking nut 26 configured to engage a threaded surface realized on a dedicated portion 19a' extending from cylindrical portion 19a of kingpin 19.

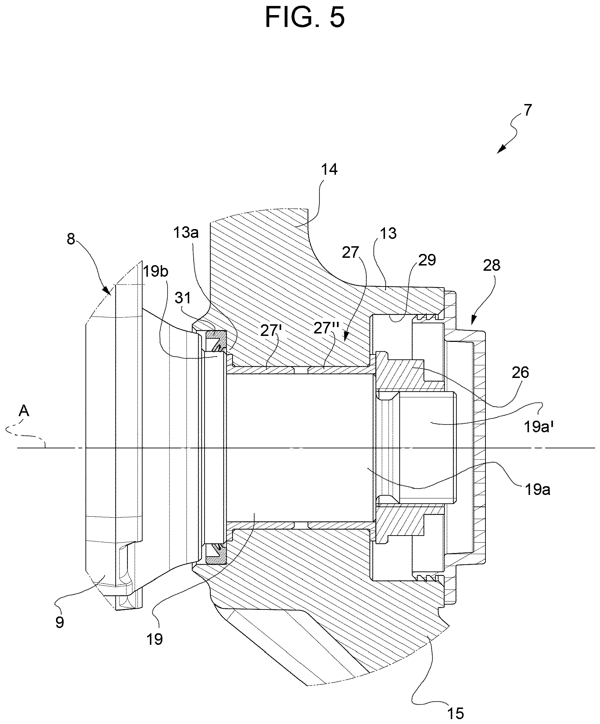

According to a second embodiment of the invention, as shown in Figure 5, rotatably free coupling between hub 13 and kingpin 19 comprises a sleeve bearing coupling 27.

In particular, according to the embodiment of figure 5, sleeve bearing coupling 27 comprises two sleeve bearings 27', 27'', preferably having a "L-shaped" cross-section. As known, sleeve bearing 27 is made of self-lubricating materials, such as plastic material, that do not require the use of grease.

According to the above arrangement, kingpin 19 comprises again the main cylindrical portion 19a and the shoulder 19b while hub 13 is configured to define the shoulder 13a; according to the L-shape of sleeve bearing 27', shoulder 19b and 13a are not realized on the same plane one with respect to the other, so that sleeve bearing 27' is clamped between this latter.

On the opposite axial side, the other sleeve bearing 27'' is pressed between hub 13 and cylindrical portion 19a by a locking nut 26 configured to engage the threaded surface realized on the dedicated portion 19a', similarly to figure 4 embodiment.

In order to avoid that dirty elements or dust may damage the rotatably free coupling between hub 13 and kingpin 19 according to all the above described embodiments of figures 3 to 5, rocker/lever arm assembly 7 can comprise a dust cap 28 configured to fit inside a hole 29 defined by hub 13 on the opposite side with respect fixing element 9.

With regard to the first embodiment, single bearing 21 is already provided with sealing means, as known, therefore there is no need of sealant engagement between rocker/lever arm assembly 7 and fixing plate 9. Conversely, about second embodiment, there is need of sealant means 31, e.g. rotary shaft ring seals, on the opposite side with respect to the one provided with dust cap 28. Accordingly, hub 13 and/or kingpin 19 are configured to define a seat for such sealant means 31.

The operation of the above defined rocker/lever arm assembly 7 is the following.

When a force, e.g. given by an actuator, acts on upper and lower steering system elements 4, 5, this latter is transmitted to rocker/lever arm 12 which, thanks to arms 14 and 15 torsionally couples upper and lower steering system elements 4, 5 thereby controlling movement of the connected wheel assembly 2 of the vehicle. According to the proposed layout, controlling force is imparted by one of rear lower elements 5, which can be a hydraulic cylinder, and transmitted to wheel assembly 2 of the vehicle via remaining steering system elements 4,5.

Thanks to the proposed embodiment of rotatably free manner coupling between hub 13 and kingpin 19, loads are equally distributed on this latter, thereby increasing fatigue life of the rocker/lever arm 12.

In view of the foregoing, the advantages of a rocker/lever arm assembly 7 according to the invention are apparent.

Thanks to the use of a single bearing 21 or of sleeve bearing 27, it is possible to reduce assembly time of rocker arm assembly 7. Furthermore, the above allows to reduce the number of components needed to guarantee axial stability of the rotatably free coupling between hub 13 and kingpin 19, thereby reducing complexity and costs of rocker arm assembly 7.

Moreover, the use of a single bearing 21 allows not to use grease or oil since this latter is already contained, and sealed, within bearing 21 itself. Furthermore, there is no need of precise coaxiality as in known system with two bearings, since the bearing is single and can be easily fitted on kingpin 19 before the mounting of the fixing element 8 on the chassis.

The use of sleeve bearing 27 is more economic with respect to the use of the single bearing 21 and allows a more compact system. Also in the case that sleeve bearing 27 comprises more elements, they can be easily centered on kingpin 19 and they do not require strict tolerances as known two bearings systems. Moreover, sleeve bearings 27 are usually made in self-lubrication materials, accordingly, there is no necessity of grease.

Furthermore, differently with respect to known devices, the rocker/lever arm assembly 7 according to the present invention can be realized as a separate element with respect to the chassis of the vehicle and can be assembled separately to the latter and, then, fixed to the chassis. In this way it is reduced and simplified the mounting of steering assemblies 1 with respect to the known ones.

It is clear that modifications can be made to the described rocker/lever arm assembly 7 which do not extend beyond the scope of protection defined by the claims.

For example, as said, steering system 1 may be of any typology and comprising different elements from the one described above.

Clearly, shape of arms 14,15 and number of holes 17 may be varied according to the typology of steering system.

Similarly, shape of the hub 13, kingpin 19 and fixing element 8 may be varied according to steering system 1 and chassis 3 necessities. Accordingly, trust axial compression means of rotatably free coupling between hub 13 on kingpin 19 may be varied accordingly.

## Claims

1. Rocker/lever arm assembly (7) for a steering system (1) of a vehicle, said rocker/lever arm assembly (7) comprising a fixing element (8) and a kingpin (19), said kingpin (9) being fixedly carried by said fixing element (8) and said fixing element (8) being configured to be connected to a chassis (3) of said vehicle and a rocker/lever arm (12) comprising a first and second arms (14, 15) configured to be respectively connected to a first and second elements of said steering system (1), said rocker/lever arm (12) further comprising an hub (13) configured to carry said first and second arms (14, 15), said kingpin (19) being configured to carry said hub (13) in a rotatably free manner, wherein said rotatably free connection between said hub (13) with said kingpin (19) comprises a single roller bearing (21).

2. Rocker/lever arm assembly according to claim 1, wherein said single bearing (21) is a tapered rolling bearing.

3. Rocker/lever arm assembly according to any of claim 1 or 2, wherein said single bearing (21) is a multi-row bearing.

4. Rocker/lever arm assembly (7) for a steering system (1) of a vehicle, said rocker/lever arm assembly (7) comprising a fixing element (8) and a kingpin (19), said kingpin (9) being fixedly carried by said fixing element (8) and said fixing element (8) being configured to be connected to a chassis (3) of said vehicle, and a rocker/lever arm (12) comprising a first and second arms (14, 15) configured to be respectively connected to a first and second elements of said steering system (1), said fir rocker/lever arm (12) further comprising an hub (13) configured to carry said first and second arms (14, 15), said kingpin (19) being configured to carry said hub (13) in a rotatably free manner, wherein said rotatably free connection between said hub (13) with said kingpin (19) comprises a sleeve bearing (27).

5. Rocker/lever arm assembly according to claim 4, wherein said rotatably free connection comprises two sleeve bearings (27', 27'')

6. Rocker/lever arm assembly according to claim 4 or 5, wherein said sleeve bearing (27) has a L-shaped cross-section.

7. Rocker/lever arm assembly according to any of claim 4 to 6, wherein said sleeve bearing (27) is realized in auto lubricating plastic material.

8. Rocker/lever arm assembly according to any of the preceding claims, wherein said hub (13) and said first and second arms (14, 15) are realized as one piece.

9. Rocker/lever arm assembly according to any of the preceding claims, further comprising a dust cap (28) and/or sealant means (31) configured to avoid dirty of said rotatably free connection between said hub (13) and said kingpin (19).

10. Rocker/lever arm assembly according to any of the preceding claims, further comprising thrust means (24, 26) configured to maintain axially packed said rotatably free connection between said hub (13) and said kingpin (19).

11. Steering system (1) for a vehicle comprising at least a first element (4) and at least a second element (5) and a rocker/lever arm assembly (7) fixed to a chassis of said vehicle and made according to any of the preceding claims, said rocker/lever arm assembly (7) torsionally connecting said at least a first element (4) and said at least a second element (5).

## Patentansprüche

1. Kipp-/Hebelarmgruppe (7) für ein Lenksystem (1) eines Fahrzeugs, umfassend ein Befestigungselement (8) und einen Achsschenkelbolzen (19), wobei der Achsschenkelbolzen (19) fest von dem Befestigungselement (8) getragen wird, und wobei das Befestigungselement (8) ausgeführt ist, mit einem Fahrgestell (3) des Fahrzeugs verbunden zu werden; und einen Kipp-/Hebelarm (12), der einen ersten und zweiten Arm (14, 15) umfasst, die jeweils ausgeführt sind, mit einem ersten und zweiten Element des Lenksystems (1) verbunden zu werden, wobei die Kipp-/Hebelarmgruppe (12) eine Nabe (13) umfasst, die ausgeführt ist, den ersten und zweiten Arm (14, 15) zu tragen, wobei der Achsschenkelbolzen (19) ausgeführt ist, die Nabe (13) drehbar zu tragen, und wobei die drehbare Verbindung zwischen der Nabe (13) und dem Achsschenkelbolzen (19) ein einreihiges Rollenlager (21) umfasst.

2. Kipp-/Hebelarmgruppe nach Anspruch 1, wobei das einreihige Rollenlager (21) ein Kegelrollenlager ist.

3. Kipp-/Hebelarmgruppe nach einem der Ansprüche 1 oder 2, wobei das einreihige Rollenlager (21) ein mehrreihiges Rollenlager ist.

4. Kipp-/Hebelarmgruppe (7) für ein Lenksystem (1) eines Fahrzeugs, umfassend ein Befestigungselement (8) und einen Achsschenkelbolzen (19), wobei der Achsschenkelbolzen (19) fest von dem Befestigungselement (8) getragen wird, und wobei das Befestigungselement (8) dazu ausgeführt ist, mit einem Fahrgestell (3) des Fahrzeugs verbunden zu werden; und einen Kipp-/Hebelarm (12), der einen ersten und zweiten Arm (14, 15) umfasst, die jeweils dazu ausgeführt sind, mit einem ersten und zweiten Element des Lenksystems (1) verbunden zu werden, wobei der Kipp-/Hebelarm (12) eine Nabe (13) umfasst, die dazu ausgeführt ist, den ersten und zweiten Arm (14, 15) zu tragen, wobei der Achsschenkelbolzen (19) dazu ausgeführt ist, die Nabe (13) frei drehbar zu tragen, wobei die frei drehbare Verbindung zwischen der Nabe (13) und dem Achsschenkelbolzen (19) ein Gleitlager (27) umfasst.

5. Kipp-/Hebelarmgruppe nach Anspruch 4, wobei die frei drehbare Verbindung zwei Gleitlager (27', 27") umfasst.

6. Kipp-/Hebelarmgruppe nach Anspruch 4 oder 5, wobei das Gleitlager (27) einen L-förmigen Querschnitt hat.

7. Kipp-/Hebelarmgruppe nach einem der Ansprüche 4 bis 6, wobei das Gleitlager (27) aus selbstschmierendem Kunststoffmaterial besteht.

8. Kipp-/Hebelarmgruppe nach einem der vorhergehenden Ansprüche, wobei die Nabe (13) und der erste und zweite Arm (14, 15) einteilig ausgeführt sind.

9. Kipp-/Hebelarmgruppe nach einem der vorhergehenden Ansprüche, ferner umfassend eine Staubkappe (28) und/oder Dichtmittel (31), die ausgeführt sind, die frei drehbare Verbindung zwischen der Nabe (13) und dem Achsschenkelbolzen (19) vor Verschmutzung zu schützen.

10. Kipp-/Hebelarmgruppe nach einem der vorhergehenden Ansprüche, ferner umfassend Druckmittel (24, 26) umfasst, die ausgeführt sind, die frei drehbare Verbindung zwischen der Nabe (13) und dem Achsschenkelbolzen (19) axial zu fixieren.

11. Lenksystem (1) für ein Fahrzeug, umfassend zumindest ein erstes Element (4); zumindest ein zweites Element (5); und eine Kipp-/Hebelarmgruppe (7), die mit einem Fahrgestell (3) des Fahrzeugs verbunden ist und nach einem der vorhergehenden Ansprüche ausgeführt ist, wobei die Kipp-/Hebelarmgruppe (7) das zumindest eine erste Element (4) und das zumindest eine zweite Element (5) drehbar miteinander verbindet.

## Revendications

1. Ensemble bras de levier/culbuteur (7) pour un système de direction (1) d'un véhicule, ledit ensemble bras de levier/culbuteur (7) comprenant un élément de fixation (8) et un pivot (19), ledit pivot (9) étant porté de manière fixe par ledit élément de fixation (8) et ledit élément de fixation (8) étant configuré pour être relié à un châssis (3) dudit véhicule et un bras de levier/culbuteur (12) comprenant un premier et un second bras (14, 15) configurés pour être respectivement reliés à un premier et un second éléments dudit système de direction (1), ledit bras de levier/culbuteur(12) comprenant en outre un moyeu (13) configuré pour porter lesdits premier et second bras (14, 15), ledit pivot (19) étant configuré pour porter ledit moyeu (13) de manière libre en rotation, dans lequel ladite liaison libre en rotation entre ledit moyeu (13) et ledit pivot (19) comprend un seul roulement à rouleaux (21).

2. Ensemble bras de levier/culbuteur selon la revendication 1, dans lequel ledit roulement unique (21) est un roulement à rouleaux conique.

3. Ensemble bras de levier/culbuteur selon l'une quelconque des revendications 1 ou 2, dans lequel ledit roulement unique (21) est un roulement à plusieurs rangées.

4. Ensemble bras de levier/culbuteur (7) pour un système de direction (1) d'un véhicule, ledit ensemble bras de levier/culbuteur (7) comprenant un élément de fixation (8) et un pivot (19), ledit pivot (9) étant porté de manière fixe par ledit élément de fixation (8) et ledit élément de fixation (8) étant configuré pour être relié à un châssis (3) dudit véhicule et un bras de levier/culbuteur (12) comprenant un premier et un second bras (14, 15) configurés pour être respectivement reliés à un premier et un second éléments dudit système de direction (1), ledit bras de levier/culbuteur(12) comprenant en outre un moyeu (13) configuré pour porter lesdits premier et second bras (14, 15), ledit pivot (19) étant configuré pour porter ledit moyeu (13) de manière libre en rotation, dans lequel ladite liaison libre en rotation entre ledit moyeu (13) et ledit pivot (19) comprend un palier lisse (27).

5. Ensemble bras de levier/culbuteur selon la revendication 4, dans lequel ladite liaison libre en rotation comprend deux paliers lisses (27', 27").

6. Ensemble bras de levier/culbuteur selon la revendication 4 ou 5, dans lequel ledit palier lisse (27) a une section transversale en forme de L.

7. Ensemble bras de levier/culbuteur selon l'une quelconque des revendications 4 à 6, dans lequel ledit palier lisse (27) est réalisé en matière plastique autolubrifiante.

8. Ensemble bras de levier/culbuteur selon l'une quelconque des revendications précédentes, dans lequel ledit moyeu (13) et lesdits premier et second bras (14, 15) sont réalisés en une seule pièce.

9. Ensemble bras de levier/culbuteur selon l'une quelconque des revendications précédentes, comprenant en outre un capuchon anti-poussière (28) et/ou un moyen d'étanchéité (31) configuré pour éviter l'encrassement de ladite liaison libre en rotation entre ledit moyeu (13) et ledit pivot (19).

10. Ensemble bras de levier/culbuteur selon l'une quelconque des revendications précédentes, comprenant en outre des moyens de poussée (24, 26) configurés pour maintenir emballée axialement ladite liaison libre en rotation entre ledit moyeu (13) et ledit pivot (19).

11. Système de direction (1) pour un véhicule comprenant au moins un premier élément (4) et au moins un second élément (5) et un ensemble bras de levier/culbuteur (7) fixé à un châssis dudit véhicule et réalisé selon l'une quelconque des revendications précédentes, ledit ensemble bras de levier/culbuteur (7) reliant en torsion ledit au moins un premier élément (4) et ledit au moins un second élément (5).
